# EUROPÄISCHE PATENTSCHRIFT

(11) **EP 0 782 781 B1**
(45) Veröffentlichungstag und Bekanntmachung des Hinweises auf die Patenterteilung: **07.07.1999**
(21) Anmeldenummer: 95932980.6
(22) Anmeldetag: 19.09.1995
(51) Int. Cl.: H02K 19/10, H02P 5/05, H02K 29/08, H02K 7/14

(54) **ELEKTRONISCH GESCHALTETER RELUKTANZMOTOR**
ELECTRONICALLY SWITCHED RELUCTANCE MOTOR
MOTEUR A RELUCTANCE COMMUTE ELECTRONIQUEMENT

(30) Priorität: 22.09.1994 RO 9401551; 25.04.1995 RO 9500800
(43) Veröffentlichungstag der Anmeldung: 09.07.1997
(60) Teilanmeldung: 98108754.7
(73) Patentinhaber: Lungu, Iancu, 77830 Bühlertal (DE)
(72) Erfinder: Lungu, Iancu, 77830 Bühlertal (DE)
(74) Vertreter: Gerbaulet, Hannes
(86) Internationale Anmeldenummer: RO9500012
(87) Internationale Veröffentlichungsnummer: WO9609683

(56) Entgegenhaltungen:
- EP-A- 0 422 226
- EP-A- 0 441 970
- EP-A- 0 455 578
- EP-A- 0 500 963
- WO-A-90/11641
- CH-A- 431 701
- DE-A- 3 138 323
- FR-A- 2 224 913
- GB-A- 2 266 196
- US-A- 4 644 207
- US-A- 5 365 137
- EUROPEAN TRANSACTIONS ON ELECTRICAL POWER ENGINEERING, vol. 3, no. 4, 1 July 1993 pages 265-272, XP 000398517 STEIERT U ET AL 'TORQUE CONTROL OF THE DOUBLY-SALIENT RELUCTANCE MOTOR'
- PATENT ABSTRACTS OF JAPAN vol. 018, no. 113 (E-1514) 23 February 1994 & JP,A,05 308 746 (MATSUSHITA ELECTRIC IND CO LTD) 19 November 1993
- PATENT ABSTRACTS OF JAPAN vol. 012, no. 215 (E-623) 18 June 1988 & JP,A,63 011 052 (SECOH GIKEN INC) 18 January 1988
- PATENT ABSTRACTS OF JAPAN vol. 009, no. 065 (E-304) 26 March 1985 & JP,A,59 204 451 (TOKYO DENKI KK) 19 November 1984

## Beschreibung

Die Erfindung geht aus von einem elektronisch kommutierten Reluktanzmotor mit gewickelten, magnetisch voneinander getrennten Jochen zur Erzeugung eines pulsierenden Magnetfeldes und mit einem gegenüber den Jochen drehbaren Rotor mit von den Polen der Joche anziehbaren Rotorpolen, wobei diese Anziehung in Abhängigkeit von der Stellung der Rotorpole gegenüber den Polen der gewickelten Joche gegenüber den Polen der gewickelten Joche elektronisch steuerbar ist, wobei mindestens eine Wicklung eines Jochs durch einen Leistungshalbleiter in Reihe mit einer Gleichspannungsquelle schaltbar und der Leistungshalbleiter in Abhängigkeit von der Stellung der Rotorpole gegenüber den Polen der Joche steuerbar ist, wobei die Pole der gewickelten Joche sowie die des Rotors paarweise und diametral symmetrisch gegenüber der Drehwelle des Motors angeordnet sind und wobei sich zwischen den Rotorpolen des Rotors nicht-magnetische Lücken befinden und die Rotorpole durch ein Joch verbunden sind, wie er aus der EP-A-0500963 bekannt ist.

Die Veröffentlichung PATENT ABSTRACTS OF JAPAN Vol. 009, no. 065 (E-304), 26 March 1985 & JP,A 59204451 (TOKYO DENKI KK) 9 November 1984, beschreibt einen Elektromotor, bei dem sowohl der Rotor und der aus einem gewickelten Joch bestehenden Außenrotor sich in entgegengesetzten Richtungen drehen und dabei jeweils einen Teil der nutzbaren Motorleistung erzeugen.

Aus "European Transactionen Electrical Power Energeeing", Vol 3, Nr. 4, 1 Juli 1993, Seiten 265-277, ist ein Reluktanzmotor mit einer größeren Anzahl von Polen und Phasen bekannt.

Ein üblicher, elektronisch kommutierter Reluktanzmotor ist auch aus dem Prospektus der Fa. Tasc Drives Ltd., England bekannt. Dieser Motor hat 8 Statorpole und einen sechspoligen Rotor, der sich im Inneren dieses Stators dreht. Der Magnetfluß, den der Rotor erregt, verläuft über zwei gegenüberliegende Pole und durchläuft die Hälfte des Statorumfanges sowie den Durchmesser des Rotors; er durchläuft also in beträchtlicher Länge nichtbewickelte Eisenjoche, die lediglich Verluste verusachen.

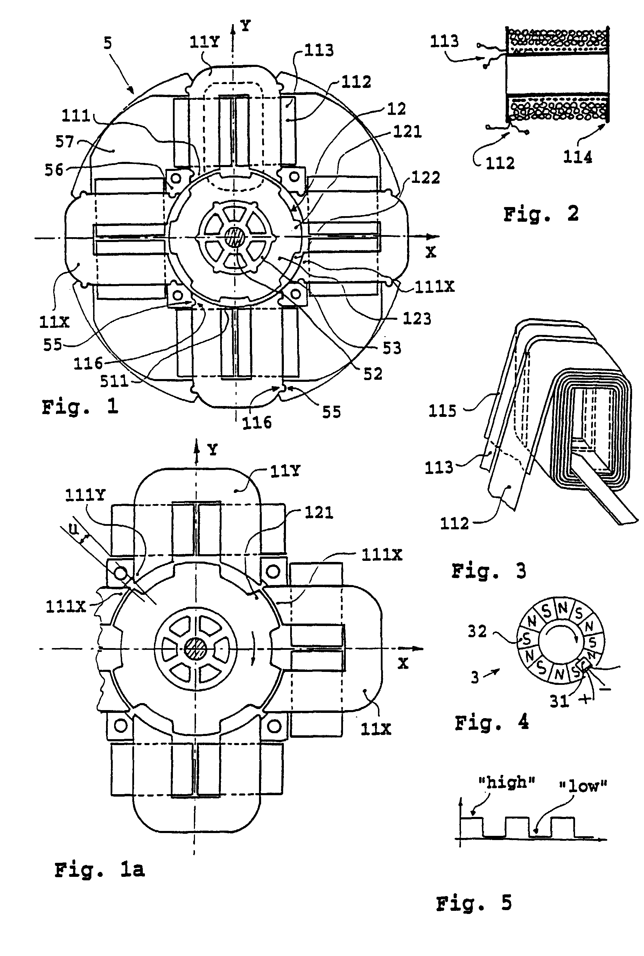

Die DE-OS 295 30 32, Fig.1 zeigt einen Motortyp, der drei bewickelte Ständerjoche hat, die untereinander isoliert sind. Da die Statorpole zu 120 Grad, also nicht gegenüberliegend sind, wirken starke Radialkräfte auf den Rotor, die zu einem vorzeitigen Verschleiß der Lager führen.

Aufgabe der Erfindung ist es, eine Möglichkeit aufzuzeigen, wie man einen elektronisch kommutierten Motor baut, und allgemeingültige Lösungen anzubieten, im Hinblick auf den Magnetkreis, mit dem Ziel, einen preiswerten, leichten und mit niedrigen Verlusten behafteten Motor zu bekommen.

Die Aufgabe wird bei einem Reluktanzmotor der eingangs genannten Art mit den in Anspruch 1 angegebenen Mermale gelöst.

Die Erfindung betrifft einen neuen Typ eines Gleichstrommotors, der gewickelte magnetische Joche beinhaltet, wobei das Drehfeld, das der Rotor antreibt, durch die elektronische Kommutierung der Wicklungen der Magnetjoche erfolgt.

Im Gegensatz zu den allermeisten elektronisch kommutierten Motoren braucht der Motor der Erfindung nach keine Permanentmagnete, um einen Nutzdrehmoment zu erzeugen, und ist dadurch billiger herstellbar, als die üblichen Motoren dieser Gattung.

Allgemeine theoretische Betrachtungen:
Die erfindungsgemäßen, elektronisch kommutierten Reliktanzmotoren wurden lange Zeit gegenüber den permanentmagneterregten Motoren als unterlegen betrachtet, weil die Magnetisierungsenergie der Joche nicht von Permanentmagneten stammt, sondern jedes mal, wenn die elektromagnetischen Pole die Rotorpole anziehen sollen, auf elektrischem Wege geliefert werden muß. Diese Energie wird nach der Lehre der Erfindung zyklisch zurückgewonnen und dem funktionell nachfolgenden Joch übertragen, weil die Selbstinduktionsspannung Ua, die aus der Entmagnetisierungsenergie eines Joches 11Y stammt, dem nachfolgenden Joch 11X als Vormagnetisierungsenergie übertragen wird. Dadurch wird Energieersparnis (ein hoher Wirkungsgrad) sowie ein schnellerer Anstieg des Magnetflusses in den Jochen erreicht, denen sich Rotorpole nähern, die sich von den gerade abgeschalteten Polen entfernen.

Um die Erfindung besser zu verstehen, wird hier ein Numerierungssystem der Bezugszeichen der Zeichnungen definiert, in dem die Anfangsbuchstaben des Bezugszeichens die Untergruppe zeigt, zu der der bezeichnete Gegenstand gehört, der folgenden Konvention nach:
- Die Teile des elektromotorischen Kreises (den der Nutzdrehmoment erzeugt) fangen mit der Ziffer 1 an,
- die Teile des Kreises, die zur Ermittlung der Stellung der Rotorpole gegenüber der Pole des elektromagnetischen Erregerkreises dienen, fangen mit der Ziffer 3 an,

Alle diese Bestandteile sind im Prinzip in vielen Varianten vom Stand der Technik bekannt und sind Gegenstand der Erfindung nur in dem Maße, in dem sie durch sinvolle Kombinationen mit dem magnetomotorischen Kreis (Eisenjoche und Wicklungen) zusammenwirken, welcher wichtige Neuheitsmerkmale hat.

Der motorische Magnetkreis ist dadurch gekennzeichnet, daß auf der Seite der gewickelten Magnetjoche (und soweit wie möglich auch auf der Seite des Rotors) Magnetpfade (als Kraftlinien des Magnetflusses verstanden) zum Einsatz kommen, die so kurz wie möglich sind.

Mindestens 50% der Länge des Magnetkreises der gewickelten Joche befinden sich innerhalb der vom Strom durchflossenen Wicklungen, tragen also positiv zu der Entstehung des motorischen Magnetflußes bei.

Im günstigsten Fall kann es vorkommen daß die Wicklungen bis zu 90% der Länge der Joche 11 umfassen.

Das gewickelte Joch (oder die Joche) ist symmetrisch gegenüber dem Rotor angeordnet, so daß keine radialen Magnetkräfte entstehen, sondern nur Drehmomente.

Die Fig. 1 zeigt eine Gesamtansicht eines erfindungsgemäßen Motors als kein einschränkendes Ausführungsbeispiel.

Der magnetische Motorkreis besteht aus 2 waagerechten U-förmigen Magnetjochen 11X und zwei senkrechten Magnetjochen 11Y, wobei die 4 Joche identisch sind.

Jedes Joch hat je zwei Pole 111, die zu dem Rotor gerichtet sind, die die Nord bzw. Süd- Polarität annehmen, wenn durch die Hauptwicklungen 112 oder durch die Nebenwicklungen 113 ein Strom fließt.

Es gibt also acht Pole, die Segmente eines Kreisumfanges darstellen, inmitten dessen der Rotor 12 sich mittig dreht.

Dieser hat sechs Pole 121, die durch einen kleinen Luftspalt von den Außenpolen 111 getrennt sind, die eine Fläche haben, die in etwa der Fläche der Pole 111 entspricht, und eine Breite, die mit der Öffnung der zwei Schenkel der Joche 11 in etwa übereinstimmt.

Wie man der Fig. 1 entnehmen kann, wenn vier Rotorpole 121 gegenüber vier Pole 111 der senkrechten Joche 111Y liegen, so befinden sich die übrigen waagerechten Außenpole 111X gegenüber den Pollücken 122 der Rotorpole 121.

Die Rotorpole 121 sind untereinander durch ein gemeinsames Rotorjoch 123 verbunden, so daß diese Teile lediglich Ausformungen des Blechpaketes des Rotors 12 sind, welches aus gestanztem elektromagnetischem Blech besteht, das eine runde Form mit Zacken hat.

Diese Teile sind mit Hilfe eines elastischen Teils 53 auf der Motorwelle 52 befestigt.

Dieses Teil ist z. B. aus einem Kunststoff mit elastischen Eigenschaften hergestellt und bezweckt, die Rotorschwingungen zu dämpfen oder dessen Gewicht zu reduzieren. Dieses Teil 53 kann fehlen, falls die Bohrung der Rotorbleche 12 direkt auf die Motorwelle 52 preßt.

Die gewickelten Joche 11 sind auch aus U-förmigen Blechpaketen gebildet, wobei die Blechstärke je nach der Motordrehzahl (Kommutationsfrequenz) gewählt wird.

Als Richtwert sowohl für die Stärke der Bleche der Joche 11 wie für die der rotorischen Bleche sind 0,1 bis lmm, wobei die dünnen Bleche für hohe Drehzahlen (50 000 U/min.) geeignet sind, und die dicken Bleche für Drehzahlen bis ca. 500-1000 U/min. zum Einsatz kommen.

Als preisgünstiges Material für die gewickelten Joche 11 wie für den Rotor 12 wird Siliziumblech (für Transformatoren) empfohlen.

Für die gewickelten Joche 11 kann man auch kornorientierte Bleche mit einer magnetischen Vorzugsrichtung verwenden, in Form von U-Stanzblechen (die Vorzugsrichtung ist dabei paralell zu den U-Schenkeln) oder in der Form von gewickelten, geschnittenen und geschliffenen Kernen (wie bei Transformatoren mit Schnittbandkernen). Diese Lösung ist allerdings teuerer.

Der Querschnitt der Joche ist auf jeden Fall rechteckig, was zu Problemen bei der Bewicklung mit stärkeren Drähten (über 1mm2 Querschnitt) führen kann. In einer speziellen Ausführung weist die isolierende Schicht zwischen den Blechen elastische Eigenschaften auf, was zu der Dämpfung der magnetostriktiven Schwingungen oder zu der Abdichtung des Blechpaketes dienen kann.

Auf die U-Joche werden (vorzugsweise vorgefertigte) Wicklungen eingeschoben, wobei jedes Joch mindestens eine Hauptwicklung 112 hat.

Diese Wicklungen können in üblicher Weise mit Lackdraht, mit oder ohne Wickelkörper (mit Backlackdraht) ausgeführt werden, s. Fig. 2.

Bei einer üblichen Drahtwicklung kann sich z. B. die mit dünnerem Draht ausgeführte Nebenwicklung 113 auf einem Wickelkörper 114 befinden, unter der Hauptwicklung 112.

Vorzugsweise wird jedoch der Erfindung nach eine Bandwicklung eingesetzt, und zwar aus einem isolierten oder nichtisolierten Kupfer- oder Aluminiumband.

In letzterem Fall wird das Hauptwickelband einseitig mit einer Isolierfolie 115 (z.B. aus Polyester) flankiert, die etwas breiter als das elektrisch leitende Band ist, so daß Kurzschlüsse zwischen den spiralförmig gewickelten Rändern des metallischen Wickelbandes nicht erfolgen können, s. Fig. 3.

Eine besonders günstige Lösung ist die gleichzeitige Ausführung der Hauptwicklung 112 wie der Nebenwicklung mit geringerem Querschnitt 113.

In diesem Fall werden die gleich starken, jedoch unterschiedliche Breite aufweisenden Wickelbänder in angemessenem Abstand paralell über das gleiche, ausreichend breite isolierende Folie 115 gewickelt.

Da die Ausführung dieser Wicklungen Techniken benutzt, die von der Herstellung von Kondensatoren und Transformatoren bekannt sind, werden wir keine Details beschreiben, die die Ausführung der Anschlüsse und die Verfestigung einer wickelkörperlosen Spule betreffen.

Je zwei der in Verbindung zu der Fig. 2 und 3 beschriebenen Wicklungen werden über die zwei Schenkel der Joche 111 eingeschoben, wo sie nach Bedarf geschaltet werden können.

Der motorische Magnetkreis 1 besteht also aus der gewickelten Joche 11 mit je zwei Kernen 11X und 11Y, acht Hauptwicklungen 112 und eventuell acht Nebenwicklungen 113, zusammen mit dem Rotor 12.

Wenn man getrennt ein Joch 11 betrachtet und zwei Rotorpole 121, zusammen mit dem Teil des Joches 123, das diese Pole verbindet, und wenn die zwei Wicklungen 112 von Strom durchflossen werden, so entsteht ein Magnetfluß, der der Punktlinie aus Fig.1 entspricht, sodaß dieses Magnetkreis dem eines Schwingmotors aus einen Rasierapparat ähnelt.

Wenn die Rotorpole 121 nicht den Polen 111X der Außenjoche gegenüberliegen (siehe Fig.1), und wenn die Joche 11X feststehen, so werden als Folge des Stromdurchganges die Pole 111X die Rotorpole 122 anziehen, wobei ein Drehmoment entsteht, das den Rotor 12 um ca. 30 Grad dreht.

Damit diese diskreten 30 Grad Bewegungen zu einer kontinuierlichen Drehbewegung werden, ist es notwendig, daß die Stromleitung zu den in Richtung der Achsen X und Y gewickelten Joche in einer entsprechenden Reihenfolge geschieht, welche von dem Rotorpositionserfassungskreis 3 koordiniert wird, und von einem elektronischen Steuerkreis in Steuersignale der Wicklungen umgesetzt ist.

Der Rotorpositionserfassungskreis 3, welcher das Abschaltsignal für die Wicklungen der X- Achse bzw. das Einschaltsignal für die der Y- Achse nach einer Rotordrehung von 30 Grad liefern soll, besteht nach der Fig. 4 aus einer mehrpoligen Magnetscheibe 32, die sechs Polpaare hat und auf dem Rotor befestigt ist, der sich vor einem feststehendem Hallsensor 31 bewegt, welcher in seiner Stellung zum Zwecke der Findung eines optimalen Arbeitspunktes, der Leistungsregelung oder zur Drehrichtungsumkehr anpaßbar ist. Wenn die Pole der Magnetscheibe 32 sich hintereinander vor dem Hallsensor 31 (mit digitalem Ausgang) bewegen, so erscheint an dessen Ausgang ein Logiksignal "low" oder "high", je nach der Rotorlage, siehe Fig. 5.

## Patentansprüche

1. Elektronisch kommutierter Reluktanzmotor mit gewickelten, magnetisch voneinander getrennten Jochen (11) zur Erzeugung eines pulsierenden Magnetfeldes und mit einem gegenüber den Jochen (11) drehbaren Rotor (12) mit von den Polen (111) der Joche anzieh-baren Rotorpolen (121), wobei diese Anziehung in Abhängigkeit von der Stellung der Rotorpole (121) gegenüber den Polen (111) der gewickelten Joche (11) elektronisch steuerbar ist, wobei mindestens eine Wicklung (112) eines Jochs (11) durch einen Leistungshalbleiter (21) in Reihe mit einer Gleichspannungsquelle schaltbar und der Leistungshalbleiter (21) in Abhängigkeit von der Stellung der Rotorpole (121) gegenüber den Polen (111) der Jcche (11) steuerbar ist, wobei die Pole (111) der gewickelten Joche (11) sowie die des Rotors (121) paarweise und diametral symmetrisch gegenüber der Drehwelle (52) des Motors angeordnet sind und wobei sich zwischen den Rotorpolen (121) des Rotors (12) nicht-magnetische Lücken (122) befinden und die Rotorpole (121) durch ein Joch (123) verbunden sind,
**dadurch gekennzeichnet**, daß
die Joche (11) U-förmig sind und die Zahl der U-förmigen Joche (11) vier beträgt, die Joche (11) Wicklungen (112) tragen, die auf einem Kreisumfang acht Magnetpole (111) bilden, die Zahl der Rotorpole (121) des Rotors (12) sechs beträgt und der Abstand zwischen den Außenecken der Pole (111X,111Y) benachbarter Joche im Bereich des Luftspaltes kleiner ist als der Abstand zwischen den Innenecken der beiden Pole eines Jochs (11) im Bereich des Luftspaltes.

2. Motor nach Anspruch 1, **dadurch gekennzeichnet**, daß die Wicklungen (112, 113) der Joche (11) eine Länge haben, die mindestens 50 % der magnetisch aktiven Länge der Joche (11) beträgt.

3. Motor nach Anspruch 1 oder 2, **dadurch gekennzeichnet**, daß er ein elektronisch kommutierter 2-Phasen (X,Y)-Motor ist.

4. Motor nach einem der Ansprüche 1 bis 3, **dadurch gekennzeichnet**, daß der Abstand zwischen den Außenecken der Pole (111X,111Y) benachbarter Joche (11) im Bereich des Luftspaltes derart klein gewählt ist, daß er hinsichtlich der magnetischen Verluste optimiert ist, wobei der Abstand mindestens dreimal so groß wie der Luftspalt ist.

5. Motor nach einem der vorhergehenden Ansprüche, **dadurch gekennzeichnet**, daß die Joche (11X,11Y) im Bereich zwischen den Wicklungen (112) und dem Rotor (12) gegeneinander radial befestigt sind.

6. Motor nach einem der vorhergehenden Ansprüche, **dadurch gekennzeichnet**, daß die Joche (11) Ausnehmungen oder Erhebungen (116) aufweisen, die in korrespondierende Erhebungen oder Ausnehmungen in zwischen den Wicklungen (112) und dem Rotor (12) angeordnete Gegenstücke (55) zur formschlüssigen Befestigung der Joche (111) eingreifen.

7. Motor nach Anspruch 6, **dadurch gekennzeichnet**, daß die Gegenstücke (55) Bestandteile von Befestigungsstücken (56) sind, die auf einer Basisplatte (57) eines steifen, nichtmagnetischen Rahmens (5) befestigt sind, und die magnetisch wirkenden Teile (11,12) des Motors mittels des Rahmens (5) zueinander positioniert sind.

8. Motor nach einem der vorhergehenden Ansprüche, **dadurch gekennzeichnet**, daß er Wicklungen (112,113) aufweist, die aus mindestens einem spiralförmig gewickelten, metallischen Band hergestellt sind, wobei die Windungen durch eine Isolierfolie oder eine auf das Band aufgetragene Isolierschicht untereinander isoliert sind.

9. Motor nach Anspruch 8, **dadurch gekennzeichnet**, daß er mindestens eine Hauptwicklung (112) mit einer Nebenwicklung (113) aufweist, die aus metallischen Bändern bestehen und mit einem Abstand nebeneinander und parallel zueinander gewickelt sind.

10. Motor nach einem der vorhergehenden Ansprüche, **dadurch gekennzeichnet**, daß er eine mehrpolige, an dem Rotor (12) befestigte Magnetscheibe (32) und nur einen, einen digitalen oder analogen Ausgang aufweisenden Hallsensor (31), vor dem die Magnetscheibe (32) zur Steuerung der Stromzufuhr zu den Motorwicklungen drehbar ist, aufweist.

11. Motor nach einem der vorhergehenden Ansprüche, **dadurch gekennzeichnet**, daß ein digitaler Ausgang eines Rotorstellungssensors (31) unmittelbar die Gate-Elektrode eines Leistungshalbleiters (21Y) zur Ansteuerung einer Wicklung und mittelbar über einen den komplementären Logikzustand liefernden Schalthalbleiter (28) einen anderen Leistungshalbleiter (21Y) für eine andere Wicklung ansteuert.

12. Motor nach einem der vorhergehenden Ansprüche, **dadurch gekennzeichnet**, daß die Unterbrechung des Stromdurchganges durch die Leistungshalbleiter (21) beim Erreichen einer Strom- oder Drehzahlgrenze erfolgt.

13. Motor nach einem der vorhergehenden Ansprüche, **dadurch gekennzeichnet**, daß die Leistungs- oder Drehzahlregelung mittels einer Phasenverschiebung der Ansteuersignale von Leistungshalbleitern (21) zum Ansteuern der Wicklungen (112) durchführbar ist, wobei die Phasenverschiebung mittels einer örtlichen Verschiebung der Position eines Hallsensors (31) oder mittels der Einwirkung eines Magnetfeldes durchführbar ist.

14. Motor nach einem der vorhergehenden Ansprüche, **dadurch gekennzeichnet**, daß die Drehrichtung des Motors mittels der Invertierung des logischen Signals eines Hallsensors (31) oder mittels der Umschaltung zwischen zwei Hallsensoren (31), die in unterschiedlichen Winkelstellungen zu den Jochen (11) angeordnet sind, durchführbar ist.

15. Motor nach einem der vorhergehenden Ansprüche, **dadurch gekennzeichnet**, daß mittels logischer Vergleichsvorgänge der Induktivität der Magnetkreise (1) gegenüber dem Rotor (2) die Rotorstellung ermittelbar ist und diese elektronische Information zur Steuerung des Laufs oder des Anlaufens des Motors für die sukzessive Ansteuerung von Leistungshalbleitern (21) zum Ansteuern der Wicklungen (112) verwendbar ist.

16. Motor nach einem der vorhergehenden Ansprüche, **dadurch gekennzeichnet**, daß das Abschalten mindestens einer Wicklung (112X) auf Basis ihrer Betriebsparameter, wie z. B. des Stromes, oder aufgrund der in der nachfolgenden Wicklung (112Y) induzierten Spannung durchführbar ist, wobei der Abschaltvorgang nach einem elektronischen Programm steuerbar ist.

17. Motor nach einem der vorhergehenden Ansprüche, **dadurch gekennzeichnet**, daß die Steuerung von Leistungshalbleitern (21) zum Ansteuern der Wicklungen (112) mittels einer elektronischen Schaltung mit festgelegtem Programm ohne die Ermittlung der Rotorstellung erfolgt.

18. Motor nach einem der vorhergehenden Ansprüche, **dadurch gekennzeichnet**, daß er einen Rotor mit Kurzschlußkäfig aufweist.

19. Motor nach einem der vorhergehenden Ansprüche, **dadurch gekennzeichnet**, daß er einen mittels einer aus Kunststoff, aus einer Polymer- oder Elastomerschicht oder aus einer geeignete magnetische oder elektrische Eigenschaften aufweisenden metallischen Legierung bestehenden dünnen Hülle (512) nach außen abgedichteten Rotorraum aufweist, wobei die Hülle (512) nur auf kleinen Zwischenbereichen durch Druckkräfte beansprucht ist und sich mit dem größten Teil ihrer Oberfläche auf den Außenpolen (111) bzw. auf einer zwischen den Außenpolen (111) angeordneten, nichtmagnetischen Füllung abstützt.

20. Motor nach einem der vorhergehenden Ansprüche, **dadurch gekennzeichnet**, daß der Rotor des Motors (12) formschlüssig mit dem Pumpenrotor (62) einer Motorpumpe verbunden ist, wobei der Rotor des Motors (12) und der Pumpenrotor (62) auf einer Welle (52), vorzugsweise aus keramischem Material, angeordnet sind, die zwischen Lagern (54) drehbar ist, so daß die Welle (52) keine Drehmomentbelastung des Pumpenrotors (62) auf den Rotor des Motors (12) überträgt.

21. Motor nach einem der vorhergehenden Ansprüche, **dadurch gekennzeichnet**, daß zwischen der Rotorwelle (52) und dem Rotor (12) ein elastisches Stück (53) angeordnet ist.

22. Motor nach einem der vorhergehenden Ansprüche, **dadurch gekennzeichnet**, daß er Bleche aufweist, die untereinander durch einen isolierenden Kleber mit elastischen Eigenschaften befestigt oder sogar abgedichtet sind.

23. Motor nach einem der vorhergehenden Ansprüche, **dadurch gekennzeichnet**, daß die elektronischen Bauelemente auf einer einzigen Schaltungsplatine integriert sind, die mit den gewickelten Jochen verbunden ist.

## Claims

1. Electronically commutated reluctance motor with wound, magnetically separated yokes (11) for the generation of a pulsating magnetic field and with a rotor (12) rotatable relative to the yokes (11) with rotor poles (121) attractable by the poles (111) of the yokes, this attraction being electronically controllable in dependence upon the position of the rotor poles (121) relative to the poles (111) of the wound yokes (11), in which case at least one winding (112) of a yoke (11) is switchable by a power semiconductor (21) in series with a D.C. source and the power semiconductor (21) being controllable in dependence upon the position of the rotor poles (121) relative to the poles (111) of the yokes (11), the poles (111) of the wound yokes (11) as well as those of the rotor (121) being disposed in pairs and diametrically symmetrically relative to the rotating shaft (52) of the motor and in which case, between the rotor poles (121) of the rotor (12), non-magnetic gaps (122) exist and the rotor poles (121) are interconnected by means of a yoke (12),
characterized in that
the yokes (11) are U-shaped and the number of U-shaped yokes (11) is four, in that the yokes (11) carry windings (112), which, on a circular circumference, form eight magnetic poles, in that the number of rotor poles (121) of the rotor (12) is six and the distance between the external corners of the poles (111X,111Y) of adjacent yokes within the region of the air gap is smaller than the distance between the internal corners of the two poles of a yoke (11) within the region of the air gap.

2. Motor according to Claim 1,
characterized in that
the windings (112,113) of the yokes (11) possess a length which amounts to at least 50% of the magnetically active length of the yokes (11).

3. Motor according to either Claim 1 or 2,
characterized in that
the same is an electronically commutated 2-phase (X,Y) motor.

4. Motor according to any of Claims 1 to 3,
characterized in that
the distance between the external corners of the poles (111X,111Y) of adjacent poles (11) within the region of the air gap is selected to be so small that it is optimized with regard to the magnetic losses, the distance being at least thre times as large as the air gap.

5. Motor according to any of the preceding claims,
characterized in that
the yokes (11X,11Y) within the region between the windings (112) and the rotor (12) are attached so as to be radial to each other.

6. Motor according to any of the preceding claims,
characterized in that
the yokes (11) possess recesses or elevated portions (116), which engage into corresponding elevated portions or recesses in counterparts (55) disposed between the windings (112) and the rotor (12) for the positively locking fastening of the yokes (111).

7. Motor according to Claim 6,
characterized in that
the counterparts (55) are component parts of fastening pieces (56) which are mounted on a base plate (57) of a rigid, non-magnetic frame (5) and in that the magnetically active parts (11,12) of the motor are reciprocally positioned with the aid of the frame (5).

8. Motor according to any of the preceding claims,
characterized in that
the same possesses windings (112,113) which are fabricated from a helically wound metallic band, the windings being reciprocally insulated by an insulating sheeting or an insulating layer applied to the band.

9. Motor according to Claim 8,
characterized in that
the same possesses at least one main winding (112) with a secondary winding (113), which are comprised of metallic bands and are wound at a distance from each other and parallel to one another.

10. Motor according to any of the preceding claims,
characterized in that
the same possesses a multipolar magnetic disk (32) fixed to the rotor (12) and solely one Hall sensor (31) possessing a digital or analogue output, in front of which the magnetic disk (32) is rotatable for controlling the power supply to the motor windings.

11. Motor according to any of the preceding claims,
characterized in that
a digital output of a rotor position sensor (31) directly selects the gate electrode of a power semiconductor (21Y) for triggering a winding and, via a switching semiconductor (28) supplying the complementary logic state, indirectly triggers another power semiconductor (21Y) for another winding.

12. Motor according to any of the preceding claims,
characterized in that
the interruption of the current passage through the power semiconductor (21) takes place when reaching a current or a speed limit.

13. Motor according to any of the preceding claims,
characterized in that
the power or speed control can be affected with the aid of a phase shift of the triggering signals of power semiconductors (21) for triggering the windings (112), while the phase shift can be effected with the aid of a local displacement of the position of a Hall sensor (31) or with the aid of the action of a magnetic field.

14. Motor according to any of the preceding claims,
characterized in that
the direction of rotation of the motor can be effected with the aid of the inversion of the logic signal of a Hall sensor (31) or with the aid of the changing over between two Hall sensors (31), which are disposed in different angular positions relative to the yokes (11).

15. Motor according to any of the preceding claims,
characterized in that,
with the aid of logic reference processes of the inductance of the magnetic circuits (1) relative to the rotor (2), the rotor position can be determined and this electronic information can be utilized for controlling the running or the starting of the motor for the successive selection of power semiconductors (21) for triggering the windings (112.

16. Motor accoding to any of the preceding claims,
characterized in that
the switching off of at least one winding (112X) can be effected on the basis of its operating parameters, such as e.g. the current, or by virtue of the voltage indiced in the following winding (112Y), the switching process in this case being controllable in accordance with an electronic program.

17. Motor according to any of the preceding claims,
characterized in that
the control of power semiconductors (21) for the triggering of the windings (112) takes place with the aid of an electronic circuit with a fixed program without the determination of the rotor position.

18. Motor according to any of the preceding claims,
characterized in that
the same is provided with a rotor possessing a squirrel-cage winding.

19. Motor according to any of the preceding claims,
characterized in that
the same possesses a rotor space sealed against the outside by means of a thin sheath (512) comprised of plastic, of a polymer or elastomer layer or is comorised of a metallic alloy possessing suitable magnetic or electrical properties, the sheath (512) being acted upon by pressure forces only on small intermediate areas and, with the largest part of its surface, is supported on the external poles (111) or on a non-magnetic filling disposed between the external poles.

20. Motor according to any of the preceding claims,
characterized in that
the rotor (12) of the motor is positively lockingly connected with the pump rotor (62) of a motor pump, while the rotor (12) of the motor and the pump rotor (62) are mounted on a shaft (52), preferably of ceramic material, which is rotatable between bearings (54) so that the shaft (52) does not transmit any torque strain from the pump rotor (62) to the rotor (12) of the motor.

21. Motor according to any of the preceding claims,
characterized in that,
between the rotor shaft (52) and the rotor (12), an elastic piece is disposed.

22. Motor according to any of the preceding claims,
characterized in that
the same possesses laminations which are reciprocally attached or even sealed by means of an insulating adhesive with elastic properties.

23. Motor according to any of the preceding claims,
characterized in that
the electronic components are integrated on a single circuit board which is connected with the wound yokes.

## Revendications

1. Moteur à reluctance commuté électroniquement avec des jougs magnétiques (11) enroulés, séparés magnétiquement les uns des autres pour la génération d'un champ magnétique pulsant et avec un rotor (12) rotatif par rapport aux jougs magnétiques (11) avec des pôles de rotor (121) pouvant être attirés par les pôles (111) des jougs magnétiques, cette attraction pouvant être commandée électroniquement en fonction de la position des pôles de rotor (121) par rapport aux pôles (111) des jougs magnétiques enroulés (11), au moins un enroulement (112) d'un joug magnétique (11) pouvant être commuté en série avec une source de tension continue par un semiconducteur de puissance (21) et le semiconducteur de puissance (21) pouvant être commandé en fonction de la position des pôles du rotor (121) par rapport aux pôles (111) des jougs magnétiques (11), les pôles (111) des jougs magnétiques enroulés (11) ainsi que ceux du rotor (121) étant placés par paires et diamétralement symétriques par rapport à l'arbre rotatif (52) du moteur et des interstices non magnétiques (122) se trouvant entre les pôles de rotor (121) du rotor (12) et les pôles de rotor (121) étant reliés par un joug (123),
caractérisé en ce
que les jougs magnétiques (11) sont en forme d'U et les jougs magnétiques en forme d'U (11) étant au nombre de quatre, les jougs magnétiques(11) portent des enroulements (112) qui forment sur un périmètre de cercle huit pôles magnétiques (111), les pôles de rotor (121) du rotor (12) étant au nombre de six et la distance entre les coins extérieurs des pôles (111X, 111Y) de jougs magnétiques voisins dans la zone de l'entrefer étant plus petite que la distance entre les coins intérieurs des deux pôles d'un joug magnétique (11) dans la zone de l'entrefer.

2. Moteur selon la revendication, caractérisé en ce que les enroulements (112, 113) des jougs magnétiques (11) ont une longueur qui est d'au moins 50 % de la longueur active magnétiquement des jougs magnétiques (11).

3. Moteur selon la revendication 1 ou 2, caractérisé en ce que c'est un moteur à 2 phases (X, Y) commuté électroniquement.

4. Moteur selon l'une des revendications 1 à 3, caractérisé en ce que la distance entre les coins extérieurs des pôles (111X, 111Y) de jougs magnétiques voisins (11) dans la zone de l'entrefer est choisie si petite qu'elle est optimalisée pour ce qui est des pertes magnétiques, la distance étant au moins trois fois plus grande que l'entrefer.

5. Moteur selon l'une des revendications précédentes, caractérisé en ce que les jougs magnétiques (11X, 11Y) dans la zone entre les enroulements (112) et le rotor (12) sont fixées radialement l'une en face de l'autre.

6. Moteur selon l'une des revendications précédentes, caractérisé en ce que les jougs magnétiques (11) présentent des évidements ou des élévations (116) qui s'engrènent dans des élévations ou des évidements correspondants dans des pièces antagonistes (55) placées entre les enroulements (112) et le rotor (12) pour la fixation clabotée des jougs magnétiques (111).

7. Moteur selon la revendication 6, caractérisé en ce que les pièces antagonistes (55) sont des parties de pièces de fixation (56) qui sont fixées sur une plaque de base (57) d'un cadre rigide, non magnétique (5) et les pièces du moteur qui ont un effet magnétique (11, 12) sont positionnées les unes par rapport aux autres au moyen du cadre (5).

8. Moteur selon l'une des revendications précédentes, caractérisé en ce qu'il présente des enroulements (112, 113) qui sont fabriqués à partir d'au moins une bande métallique enroulée en forme de spirale, les enroulements étant isolés les uns par rapport aux autres par une feuille isolante ou par une couche isolante appliquée sur la bande.

9. Moteur selon la revendication 8, caractérisé en ce qu'il présente au moins un enroulement principal (112) avec un enroulement secondaire (113) qui sont constitués par des bandes métalliques et qui sont enroulés avec un écartement les uns à côté des autres et parallèlement l'un à l'autre.

10. Moteur selon l'une des revendications précédentes, caractérisé en ce qu'il présente un disque magnétique (32) multipolaire, fixé au rotor (12) et seulement un détecteur de Hall (31), qui présente une sortie numérique ou analogique, devant lequel le disque magnétique (32) est rotatif pour la commande de l'alimentation en courant vers les enroulements du moteur.

11. Moteur selon l'une des revendications précédentes, caractérisé en ce qu'une sortie numérique d'un détecteur de position de rotor (31) excite directement l'électrode de grille d'un semiconducteur de puissance (21Y) pour exciter un enroulement et excite indirectement un autre semiconducteur de puissance (21Y) pour un autre enroulement par un semiconducteur de commutation qui donne l'état logique complémentaire.

12. Moteur selon l'une des revendications précédentes, caractérisé en ce que l'interruption du passage de courant est effectuée par les semiconducteurs de puissance (21) lorsqu'un seuil de courant ou de nombre de tours est atteint.

13. Moteur selon l'une des revendications précédentes, caractérisé en ce que le réglage de la puissance ou du nombre de tours peut être effectué au moyen d'un décalage de phase des signaux d'excitation des semiconducteurs de puissance (21) pour exciter les enroulements (112), le décalage de phase pouvant être exécuté au moyen d'un décalage local de la position d'un détecteur de Hall (31) ou au moyen de l'influence d'un champ magnétique.

14. Moteur selon l'une des revendications précédentes, caractérisé en ce que le sens de rotation du moteur peut être effectué au moyen de l'inversion du signal logique d'un détecteur de Hall (31) ou au moyen de la commutation entre deux détecteurs de Hall (31) qui sont placés dans différentes positions angulaires par rapport aux jougs magnétiques (11).

15. Moteur selon l'une des revendications précédentes, caractérisé en ce que la position du rotor peut être déterminée au moyen de processus de comparaison logique de l'inductance des circuits magnétiques (1) par rapport au rotor (2) et cette information électronique peut être utilisée pour commander la marche ou le démarrage du moteur pour l'excitation successive des semiconducteurs de puissance (21) pour exciter les enroulements (112).

16. Moteur selon l'une des revendications précédentes, caractérisé en ce que la déconnexion d'au moins un enroulement (112X) peut être effectuée sur la base de ses paramètres de fonctionnement, comme par exemple du courant, ou en raison de la tension induite dans l'enroulement qui suit (112Y), le processus de déconnexion pouvant être commandé d'après un programme électronique.

17. Moteur selon l'une des revendications précédentes, caractérisé en ce que la commande des semiconducteurs de puissance (21) pour exciter les enroulements (112) se fait au moyen d'une commutation électronique avec un programme fixé sans la détermination de la position du rotor.

18. Moteur selon l'une des revendications précédentes, caractérisé en ce qu'il présente un rotor avec une cage de court-circuit.

19. Moteur selon l'une des revendications précédentes, caractérisé en ce qu'il présente un espace de rotor étanché vers l'extérieur au moyen d'une enveloppe mince (512) constituée par du plastique, par une couche de polymère ou d'élastomère ou par un alliage métallique qui présente des propriétés appropriées magnétiques ou électriques, l'enveloppe (512) n'étant sollicitée par des forces de pression que sur de petites zones intermédiaires et s'appuyant avec la plus grande partie de sa surface sur les pôles extérieurs (111) ou sur un remplissage non magnétique placé entre les pôles extérieurs (111).

20. Moteur selon l'une des revendications précédentes, caractérisé en ce que le rotor du moteur (12) est relié de manière clabotée au rotor de la pompe (62) d'une pompe de moteur, le rotor du moteur (12) et le rotor de la pompe (62) étant placés sur un arbre (52), de préférence en matière céramique, qui est rotatif entre des paliers (54) si bien que l'arbre (52) ne transmet pas de charge de couple de rotation du rotor de la pompe (62) au rotor du moteur (12).

21. Moteur selon l'une des revendications précédentes, caractérisé en ce qu'une pièce élastique (53) est placée entre l'arbre du rotor (52) et le rotor (12).

22. Moteur selon l'une des revendications précédentes, caractérisé en ce qu'il présente des tôles qui sont fixées les unes aux autres ou même étanchées par une colle isolante avec des propriétés élastiques.

23. Moteur selon l'une des revendications précédentes, caractérisé en ce que les composants électroniques sont intégrés sur une seule plaquette à circuits imprimés qui est reliée aux jougs magnétiques enroulés.
